# EUROPÄISCHE PATENTANMELDUNG

(11) **EP 1 288 941 A2**
(43) Veröffentlichungstag der Anmeldung: **05.03.2003**
(21) Anmeldenummer: 01710044.7
(22) Anmeldetag: 09.08.2001
(51) Int. Cl.: G11B 20/00

(54) **Verfahren zum Speichern einer Anzahl von Datensätzen auf Serien von informationsgleichen Datenträgern sowie Datenträger**

(71) Anmelder: Brang, Rainer, 70563 Stuttgart (DE); Bittler, Christian, 71686 Remseck (DE)
(72) Erfinder: Brang, Rainer, 70563 Stuttgart (DE); Bittler, Christian, 71686 Remseck (DE)
(74) Vertreter: Patentanwälte Ruff, Wilhelm, Beier, Dauster & Partner

(57) **Zusammenfassung**

Aufgabe der Erfindung ist es, ein Verfahren bereitzustellen, mit dem es ermöglicht wird, einerseits eine Serien- bzw. Massenproduktion der Datenträger zu ermöglichen, andererseits die Daten in effizienter Weise vor unberechtigter Vervielfältigung zu schützen.

Auf einem Datenträger wird gemäß der Erfindung wenigstens ein Datensatz abgespeichert. Hierbei wird der Datensatz in Segmente aufgeteilt, wobei wenigstens ein erstes und wenigstens ein zweites Datensegment erzeugt wird. Die ersten Datensegmente werden in an sich verarbeitbarer Form auf dem Datenträger abgespeichert. Die zweiten Datensegmente werden für jeden Datenträger individuell abgewandelt und nicht ohne Datenträger spezifische, auf dem Datenträger nicht enthaltene zusätzliche Informationen verarbeitbar auf den Datenträger abgespeichert.

## Beschreibung

Die vorliegende Erfindung betrifft ein Verfahren zum Speichern einer Anzahl von Datensätzen auf Serien von informationsgleichen Datenträgern sowie Datenträger.

Die Speicherung von Daten auf Datenträgern, insbesondere die Speicherung von digitalen Daten bietet die Möglichkeit, daß diese Daten wenigstens nahezu verlustlos in beliebiger Häufigkeit vervielfältigt werden können. Durch unrechtmäßige Vervielfältigung von Daten bzw. durch Vervielfältigung von Datenträgern mit den Daten und deren Verteilung und weite Verbreitung können große Schäden im Bereich der Urheberrechte und Lizenzerträge entstehen. Die Schäden entstehen dabei insbesondere bei den Urhebern, Werkerstellern und Verlegern, deren Erträge aus den Werken durch die unrechtmäßige Vervielfältigung gemindert werden. Bei den Daten kann es sich dabei beispielsweise um Musikwerke oder Vidoedaten, insbesondere in computerlesbarer Form - beispielsweise dem sogenannten MPEG-Format - als auch um andere weitverbreitete Datensätze, wie Computerprogramme oder deren Ausgabedaten handeln. Bei den Computerprogrammen kommen insbesondere für professionelle Benutzer erstellte, aber auch für einen weiten Nutzerkreis interessante Programme in Frage. Dies umfaßt zum einen sogenannte Standardsoftware, (Textverarbeitung, Tabellenkalkulation, Betriebssystem,...), wie sie für die Nutzung eines Computers selbst nützlich ist, zum anderen aber auch beliebige andere Software, die insbesondere bei einer jüngeren Zielgruppe Anwendung findet, hier insbesondere auch Computerspiele.

Aufgabe der Erfindung ist es, ein Verfahren bereitzustellen, mit dem es ermöglicht wird, einerseits eine Serien- bzw. Massenproduktion der Datenträger zu ermöglichen, andererseits die Daten in effizienter Weise vor unberechtigter Vervielfältigung zu schützen.

Es wird eine Reihe von Datensätzen auf einem Datenträger abgespeichert. Dabei ist unter dem Begriff Datensatz im Sinne der vorliegenden Anmeldung eine Aneinanderreihung digitaler Informationen zu verstehen, die in einer vorgegebenen strukturellen Form vorliegen und in lesbarer und abarbeitbarer Weise auf einem Datenträger abspeicherbar sind. Beispiele hierfür sind Dateien, die Aneinanderreihungen solcher Daten in definierten Dateiformaten darstellen.

Auf einem Datenträger wird gemäß der Erfindung wenigstens ein solcher Datensatz abgespeichert. Hierbei wird der Datensatz in Segmente aufgeteilt, wobei wenigstens ein erstes und wenigstens ein zweites Datensegment erzeugt wird. Die ersten Datensegmente werden in an sich verarbeitbarer Form auf dem Datenträger abgespeichert. Die zweiten Datensegmente werden für jeden Datenträger individuell abgewandelt und nicht ohne datenträgerspezifische, auf dem Datenträger nicht enthaltene zusätzliche Informationen verarbeitbar auf den Datenträger abgespeichert.

Hierbei wird im Sinne der vorliegenden Anmeldung unter Datensegment ein Teilbereich eines Datensatzes verstanden. Dieser Teilbereich kann sowohl ein zusammenhängendes Stück oder spezifisches Teil eines Datensatzes sein, als auch ein oder mehrere in anderer Form aus dem Datensatz ausgewählte Teilabschnitte.

Durch die Aufteilung wenigstens eines der Datensätze auf dem Datenträger in zwei Teilsegmente und die Tatsache, daß wenigstens ein zweites Datensegment nicht ohne datenträgerspezifische Information verarbeitbar abgespeichert ist, wird zunächst einmal erreicht, daß sich die Datenträger einer Serie von Datenträgern individuell voneinander unterscheiden. Das wenigstens eine zweite Datensegment ist auf jedem Datenträger ein anderes.

Dadurch, daß es sich um ein Segment handelt, das nicht ohne zusätzliche Information verarbeitbar ist, wird wenigstens in bezug auf ein Teil der auf dem Datenträger enthaltenen Daten eine Verarbeitung der Daten ohne Kenntnis dieser Information verhindert. Damit kann verhindert werden, daß die auf dem Datenträger enhaltenen Daten vollständig oder teilweise verarbeitet werden. Es ist von der Auswahl der Datensätze, die in Datensegmente aufgeteilt werden, und von den Informationen des Datensatzes, der in Datensegmente aufgeteilt wurde, abhängig, ob die auf dem Datenträger enthaltenen Daten teilweise verarbeitbar sind oder nicht. So ist es beispielsweise möglich, daß die auf dem Datenträger enthaltenen Datensätze bis zu einem bestimmten Teilabschnitt verarbeitbar sind und erst ab einem gewissen Punkt auf in zweiten Datensegmenten abgelegte Informationen zugegriffen wird, die ohne die zusätzliche, datenträgerspezifische Information nicht lesbar sind. Dies führt dann dazu, daß beispielsweise ein Teil der auf dem Datenträger enthaltenen Informationen abspielbar oder ausführbar ist, so daß beispielsweise ein Teil einer MPEG-Datei, insbesondere ein Anfangsteil eines Liedes abhörbar ist, während nach dem Erreichen einer bestimmten Stelle die Abhörbarkeit beendet ist, ein Lied, beispielsweise die Abhörbarkeit beendet ist, ein Lied, beispielsweise also nur zur einem Teil, insbesondere höchstens zur Hälfte abspielbar ist. Gleiches ist im Falle eines Computerprogramms möglich. So ist es denkbar, daß die Datensätze, die aufgeteilt sind, lediglich bestimmte Unterfunktionen oder Unterprogramme betreffen, so daß ein Hauptprogramm bis zum ersten Zugriff auf dieses Unterprogramm ausführbar ist. So kann beispielsweise ein Computerspiel bis zu einem bestimmten Punkt spielbar sein, während dann die Funktionalität beendet wird. Solange die nicht auf dem Datenträger enthaltenen zusätzlichen Informationen dem Benutzer nicht bekannt sind, kann die Unterfunktion nicht aufgerufen werden. Damit wird es beispielsweise möglich, eine Software so bereitzustellen, daß die Ausführung bestimmter Hauptteile und Grundfunktionalitäten des Programms gewährleistet sind, optionale Unterprogramme aber erst nach entsprechender Freigabe nutzbar werden. Ein Spiel kann teilweise spielbar sein, die zu Werbezwecken beispielsweise kostenlos verteilte CD-ROM kann - wenigstens teilweise im zweiten Datensegment liegend, die Vollversion des Spieles enthalten. Die Freigabe der Vollversion erfolgt durch Bekanntgabe der zusätzlichen Information an einen berechtigten Benutzer, der diese Vollversion dann nutzen kann, andere Dritte die zusätzliche Information (z.B. ein Schlüssel zum Entschlüsseln verschlüsselter Daten) in Verbindung mit einem anderen Datenträger jedoch nicht nutzen können, da die zusätzliche Information datenträgerspezifisch individuell ist.

Eine derartige Freigabe und die Nutzbarmachung wenigstens der Datensätze, die aufgeteilt wurden, wird dadurch ermöglicht, daß dem Nutzer in geeigneter Weise die zusätzlichen Informationen, die zur Verarbeitbarkeit der beiden Datensegmente erforderlich sind, übermittelt werden. Hierbei werden die entsprechenden zusätzlichen Informationen dem Nachfrager, beispielsweise nach Zahlung einer entsprechenden Gebühr oder nach Überprüfung einer entsprechenden Berechtigung übermittelt. Diese Übermittlung kann beispielsweise schriftlich, telefonisch über Callcenter, per E-Mail, über Internet oder in anderer geeigneter Weise erfolgen.

Ein wesentlicher Vorteil der Erfindung ist darin zu sehen, daß die zusätzlichen Informationen, die zur Verarbeitbarkeit der zweiten Datensegmente erforderlich sind, datenträgerindividuell sind. Damit ist es nicht möglich, daß dann, wenn die erforderlichen, zusätzlichen Informationen für einen bestimmten Datenträger bekannt sind, diese Informationen auch in Verbindung mit anderen informationsgleichen Datenträgern der gleichen Serie oder einer anderen Serie verwendet werden können.

Zwar ist es prinzipiell möglich, daß ein Datenträger, der eine identische Kopie eines erfindungsgemäßen Datenträgers ist, bzw. eines Datenträgers darstellt, der nach dem erfindungsgemäßen Verfahren beschrieben wurde, mit den gleichen zusätzlichen Informationen wieder in einen verarbeitbaren Datensatz umzuwandeln, es sind allerdings Kopierschutzmechanismen bekannt, die das Vervielfältigen oder Klonen von Datenträgern verhindern. Die Verwendung des erfindungsgemäßen Verfahrens und erfindungsgemäße Datenträger schließen die zusätzliche Verwendung solcher und weiterer Kopierschutzverfahren nicht aus.

Gemäß vorteilhafter Ausgestaltung der Erfindung wird vor dem Aufteilen eines Datensatzes in erste und zweite Datensegmente eine reversible Erhöhung der Entropie des Datensatzes vorgenommen. Eine solche reversible Erhöhung der Entropie erfolgt dabei gemäß bevorzugter Ausgestaltungen, beispielsweise durch Datenkompression oder Datenverschlüsselung. Dabei ist es vorzugsweise so, daß eventuell verschlüsselte Daten des ersten Datensegmentes prinzipiell oder tatsächlich durch auf dem Datenträger enthaltene oder allgemein verfügbare Verfahren wieder entschlüsselbar bzw. entkomprimierbar sind. Diese Informationen umfassen insbesondere den Schlüssel mittels dem die Verschlüsselung aufgehoben werden kann, wobei dieser selbst in einem zweiten Datensegment enthalten sein kann. Sinn und Zweck der Erhöhung der Entropie vor der Aufteilung des Datensatzes in erste und zweite Datensegmente ist es, den Informationsgehalt der zweiten Datensegmente zu erhöhen. Es soll insbesondere erschwert werden, daß aus den ersten Datensegmenten eines Datensatzes auf den Inhalt der zweiten Datensegmente des Datensatzes geschlossen oder verzichtet werden kann und damit eine Möglichkeit besteht, die erforderliche Beschaffung der nicht auf dem Datenträger enthaltenen zusätzlichen Informationen zu umgehen. Es ist jedoch durchaus möglich, daß die Entschlüsselung bzw. die Entkomprimierung prinzipiell zwar möglich wäre, für die tatsächliche Durchführung aber zuerst Informationen aus wenigstens einem zweiten Datensegment benötigt werden, das zuvor mit den zusätzlichen Informationen verarbeitbar gemacht werden muß. Die tatsächliche Wiederherstellung der verarbeitbaren Form auch der ersten Datensegmente bedarf dann also der Zugriffsberechtigung. Auch bei einer solchen Konstellation sind die ersten Datensätze im Sinne dieser Anmeldung in einer verarbeitbaren Form abgespeichert.

Wie bereits vorstehend dargelegt, ist es vorteilhaft, wenn die zweiten Datensegmente derart ausgewählt werden, daß der Verlust an Information der verbleibenden ersten Datensegmente so groß ist, daß diese höchstens teilweise verarbeitbar sind und somit eine vollständige Verarbeitung der entsprechenden Datensätze verhindert wird. Dies bestimmt insbesondere die Größe der zweiten Datensegmente. Dabei können die Datensätze solche Datensätze sein, die die Funktionalität auf dem Datenträger enthaltener Programme so beeinträchtigen, daß diese nicht ausführbar sind. Die Verarbeitbarkeit der verbleibenden ersten Datensegmente ist besonders gering, wenn insbesondere strukturelle Informationen über den Aufbau des Datensatzes nicht im ersten Datensegment enthalten sind. Deshalb wird in einer vorteilhaften Ausführungsform der Erfindung vorgeschlagen, daß insbesondere auch in Headern eines Datensatzes enthaltenen Informationen im zweiten Datensegment enthalten sind. Dabei ist es möglich, dass die Erhöhung der Entropie sich nur auf einen Teil eines Datensatzes erstreckt. Ein verbleibender Rest des Datensatzes (z.B. der Anfang) bleibt in der ursprünglichen Form erhalten und ist eventuell verarbeitbar. Das zweite Datensegment enthält vorzugsweise Informationen aus dem Teil des Datensatzes dessen Entropie erhöht wurde.

Gemäß vorteilhaften Ausgestaltungen der Erfindung sind die zweiten Datensegmente verschlüsselt auf dem Datenträger abgelegt. Dabei ist der Schlüssel zum Entschlüsseln die nicht auf dem Datenträger enthaltene zusätzliche Information. Es ist hierbei sowohl möglich, daß die zweiten Datensegmente jedes aufgeteilten Datensatzes eines Datenträgers mit einem datensatzindividuellen Schlüssel verschlüsselt sind. Dies ermöglicht es, daß über die Freigabe nur eines oder eines Teiles der Schlüssel nur ein Teil der auf dem Datenträger enthaltenen Datensätze für einen Nutzer zugänglich gemacht werden können. Andererseits ist es auch möglich, daß sämtliche zweiten Datensegmente eines Datenträgers mit dem selben Schlüssel verschlüsselt werden, so daß die Kenntnis des Schlüssels einen Zugriff auf sämtliche Daten dieses Datenträgers ermöglicht. Hierbei ist zu beachten, daß aufgrund der Tatsache, daß die zweiten Datensegmente für jeden Datenträger individuell abgewandelt sind, die Kenntnis eines Schlüssels für einen Datenträger noch nicht die Nutzung eines anderen Datenträgers der gleichen Serie von Datenträgern ermöglicht. Um eine Möglichkeit der Rückverfolgung und eine bessere Kontrolle über unberechtigte Nutzungen eines Datenträgers zu ermöglichen, kann beim Entschlüsseln zweiter Datensegmente dem Datensatz ein Identifikationsmerkmal, insbesondere ein sogenanntes Wasserzeichen beigefügt werden. Dieses Identifikationsmerkmal enthält dann zumindest mittelbar eine Information, die den Berechtigten identifiziert dem der Schlüssel zum Entschlüsseln der zweiten Datensegmente mitgeteilt wurde. Es ist hierbei insbesondere möglich, daß das Identifikationsmerkmal zusammen mit dem Schlüssel zum Entschlüsseln übermittelt wird. Hierzu ist es insbesondere möglich, daß die in dem Identifikationsmerkmal enthaltene Information als Teil der Schlüsselinformation übermittelt wird, wobei von außen nicht erkenntlich ist, welcher Informationsteil das Identifikationsmerkmal enthält und welcher Informationsteil die Information bezüglich dem Schlüssel enthält.

Die Datensätze, die aufgeteilt werden, weisen nach der Aufteilung und Verschlüsselung des zweiten Datensegmentes eine Äquivokation auf, die es nicht erlaubt, ohne den Schlüssel zum Entschlüsseln des zweiten Datensegmentes die Information des Datensatzes wiederherzustellen. Zumindest jedoch ist der Aufwand für die Wiedergewinnung der Information sehr groß, da zunächst einmal die Verschlüsselung des zweiten Datensegmentes gebrochen werden muß, bevor die Wiederherstellung des ursprünglichen Datensegmentes erreichbar ist. Darüber hinaus ist es insbesondere dann, wenn der Datensatz vor der Aufteilung in ein erstes Datensegment und ein zweites Datensegment verschlüsselt oder komprimiert wurde, - selbst bei bekanntem Schlüssel oder Kompressionsverfahren - nicht ohne weiteres erkennbar, an welcher Stelle die Daten des zweiten Datensegmentes aus dem Datensatz herausgenommen wurden. Eine Wiederherstellung des Datensatzes bedarf dann zunächst einer Ermittlung, an welcher Stelle die Daten des zweiten Datensegmentes einzufügen sind, bevor der ursprüngliche Datensatz wieder generiert werden kann. Diese Vorgehensweise ist sehr aufwendig. Sie ist insbesondere deshalb sehr aufwendig, weil die Verschlüsselung zweiter Datensegmente eines Datenträgers individuell erfolgt und somit aus der Entschlüsselung eines zweiten Datensegmentes eines Datenträgers nicht auf andere zweite Datensegmente desselben oder zweite Datensegmente anderer Datenträger geschlossen werden kann. Dies gilt insbesondere dann, wenn es sich bei den Datenträgern um sogenannte Nur-Lesedatenträger handelt, die nur gelesen werden können, aber nicht neu beschrieben werden können. Derartige Datenträger sind beispielsweise sogenannte CD-ROM's und sogenannte DVD's. Bei solchen Datenträgern ist es durchaus möglich, die Umkehrung des Verfahrens auf lediglich einen einzigen Datenträger einzugrenzen, so daß nur die einem Datenträger zugehörigen einzelnen Datensätze in Verbindung miteinander und in Verbindung mit einem Datenträger abarbeitbar sind.

Ein Datenträger gemäß der Erfindung beinhaltet eine Anzahl von Datensätzen. Er ist in zwei Datenträgersegmente aufgeteilt, ein erstes Datenträgersegment beinhaltet erste Datensegmente, die in verarbeitbarer Form auf den Datenträger abgelegt sind. Das zweite Datenträgersegment beinhaltet datenträgerspezifische, individuelle zweite Datensegmente, die nicht ohne zusätzliche auf dem Datenträger nicht enthaltene Informationen verarbeitbar sind.

Gemäß bevorzugter Ausgestaltung der Erfindung beinhaltet das erste Datenträgersegment zumindest auch erste Datensegmente, von aufgeteilten Datensätzen. Die ersten Datensegmente und eventuell auch vollständige Datensätze, die im ersten Datenträgersegment abgelegt sind, sind dabei vorzugsweise zumindest zum Teil verschlüsselt und/oder komprimiert abgespeichert. Auf dem Datenträger können sämtliche Informationen enthalten sein, die es erlauben, diese Verschlüsselung bzw. Kompression rückgängig zu machen. Die im Bereich des zweiten Datenträgersegmentes enthaltenen Informationen sind datenträgerindividuell und weichen auch innerhalb einer Serie von Datenträgern, die - nach Wiederherstellung aller Datensätze aus den Datensegmenten - untereinander informationsgleich sind, voneinander ab. Dies ist insbesondere deshalb so, weil die zweiten Datenträgersegmente zweite Datensegmente enthalten, die datenträgerindividuell verschlüsselt sind. Dabei ist vorzugsweise die Verschlüsselung der zweiten Datensegmente so gewählt, daß sie ohne zusätzliche, auf dem Datenträger nicht enthaltene Informationen nicht entschlüsselbar sind.

Gemäß bevorzugter Ausgestaltungen erfindungsgemäßer Datenträger weist das zweite Datenträgersegment ein geringeres maximales Datenvolumen als das erste Datenträgersegment auf. Das Datenvolumen des zweiten Datenträgersegmentes beträgt insbesondere ein Bruchteil des Datenvolumens des ersten Datenträgersegmentes. Es liegt insbesondere unterhalb von 10 Prozent, vorzugsweise um ca. 1 Prozent des ersten Datenträgersegmentes. Je kleiner der Anteil des zweiten Datenträgersegmentes am gesamten Datenträger ist, und je größer somit der Anteil der identisch auf allen Datenträgern enthaltenen Informationen ist, desto schneller ist der Datenträger erstellbar. Das Volumen des zweiten Datenträgersegments ist abhängig von der Anzahl und Größe der zweiten Datenträgersegmente. Das zweite Datenträgersegment muß jedoch hinreichend groß sein, um zweite Datensegmente aufzunehmen, die selbst wiederum so groß sind und soviel Informationen enthalten, daß ein wirksamer Schutz für die auf dem Datenträger abgespeicherten Informationen gegeben ist.

Gemäß bevorzugter Ausgestaltung der Erfindung kann es sich bei dem Datenträger um einen sogenannten Nur-Lesedatenträger (ROM = Read only memory), der nach einmaligem Beschreiben, beispielsweise durch den Hersteller oder in einem sogenannten Presswerk, nicht mehr veränderbar ist, handeln. Die auf ihm abgelegten Daten können zwar gelesen werden, sind jedoch nicht auf dem Datenträger modifizierbar. Insbesondere können auf dem Datenträger enthaltene Datensätze nicht verändert oder nicht überschrieben werden.

Gemäß bevorzugter Ausgestaltung der Erfindung beinhaltet der Datenträger eine Information, die ihn identifizierbar macht. Die Information, die den Datenträger identifiziert, ist insbesondere eine Seriennummer, die datenverarbeitungsmäßig und/oder von einem Benutzer lesbar ist. Durch diese Information ist insbesondere dem Datenträger bzw. den auf dem Datenträger enthaltenen zweiten Datensegmenten jeweils insgesamt oder einzeln ein Schlüssel zuordenbar, der ein Entschlüsseln der im zweiten Datenträgersegment enthaltenen Datensegmente ermöglicht. Der Schlüssel ist vorzugsweise zunächst nur dem ursprünglichen Rechteinhaber des Datenträgers bekannt und wird einem Rechteerwerber (Benutzer, Lizenznehmer...) mitgeteilt, wenn das Rechtsgeschäft des Rechteerwerbs abgeschlossen ist. Die Mitteilung des Schlüssels kann in unterschiedlichen Abwicklungsformen durchgeführt werden, hierbei ist die Schriftform, der Einsatz von Callcentern, aber auch die elektronische Übermittlung und die elektronische Freischaltung, über Internet und E-Mail, denkbar.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Im übrigen ist die Erfindung auch anhand des nachfolgenden Ausführungsbeispieles beschrieben, dabei zeigt:
- Fig. 1: das schematische Flußdiagramm eines erfindungsgemäßen Verfahrens zum Speichern von Daten;
- Fig. 2: in schematischer Darstellung das Verfahren zum Verschlüsseln zweiter Datensegmente gemäß der Erfindung;
- Fig. 3: die schematische Darstellung eines erfindungsgemäßen Datenträgers; und
- Fig. 4: den Ablauf eines Verfahrens, das es einem Benutzer erlaubt, die auf dem Datenträger abgelegten Informationen zu nutzen.

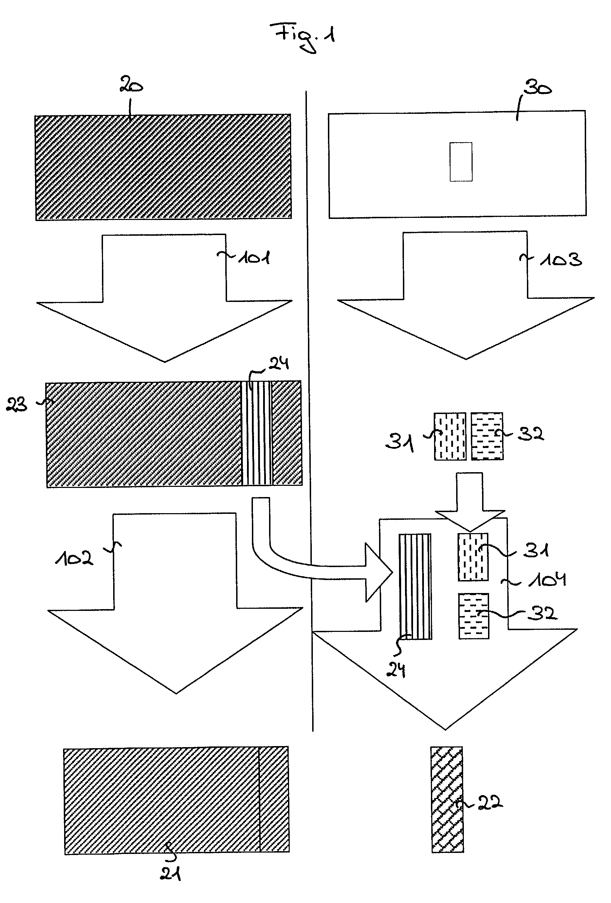

Die Fig. 1 stellt in schematischer Darstellung den Ablauf eines erfindungsgemäßen Verfahrens zum Speichern von Datensätzen auf einem erfindungsgemäßen Datenträger dar.

Dabei wird anhand der Fig. 1 beschrieben, wie ein Datensatz modifiziert und in erste und zweite Datensegmente aufgeteilt wird, die dann auf den Datenträger aufgebracht werden. Das Verfahren gemäß Fig. 1 kann dabei in gleicher Form auf alle oder einen Teil der Datensätze eines Datenträgers jeweils einzeln oder aber auch mehrere Datensätze gemeinsam angewandt werden. Es ist auch möglich alle Datensätze eines Datenträgers als einen zusammengehörenden Datensatz zu betrachten. In gleicher Weise ist es möglich, nur einen Teil der Datensätze, die auf den Datenträger übertragen werden soll, herauszugreifen und in Datensegmente aufzuteilen. Nachfolgend wird die Vorgehensweise für einen wie auch immer gestalteten Datensatz beschrieben.

In der Fig. 1 ist zunächst ein Datensatz 20 gegeben, der in ein erstes Datensegment 21 und in ein zweites Datensegment 22 aufgeteilt werden soll. Hierzu wird gemäß dem Schritt 101 des Verfahrens zunächst eine Erhöhung der Entropie des Datensatzes 20 vorgenommen. Hierzu wird der Datensatz 20 beispielsweise mittels eines allgemein bekannten Datenkompressionsverfahren komprimiert. Es wird ein modifizierter Datensatz 23 erzeugt, der jedoch noch immer sämtliche Informationen enthält und noch vollständig und verarbeitbar ist. Der modifizierte Datensatz 23 kann in der Größe unterschiedliche zum Datensatz 20 sein.

Aus diesem modifizierten Datensatz 23 wird nun ein Ausschnitt 24 ausgewählt. Aus diesem Ausschnitt 24 des modifizierten Datensatzes 23 wird - wie nachfolgend noch erläutert - das zweite Datensegment 22 des Datensatzes gebildet. Gemäß dem Schritt 102 des Verfahrens werden die nicht in dem Ausschnitt 24 enthaltenen Daten durch Aneinanderfügen zu einem zusammenhängenden ersten Datensegment 21 zusammengefügt. Das erste Datensegment weist also ein geringeres Datenvolumen auf als der modifizierte Datensatz 23, da er die Informationen des Ausschnittes 24 nicht mehr enthält. Alternativ zu dieser Ausführungsform ist es auch möglich, die durch das Ausschneiden entstandene Lücke durch einen entsprechenden Füll-Datensatz, der beispielsweise zufällig generiert sein kann, zu ersetzen, so daß nach außen hin das erste Datensegment 21 ein Volumen aufweist, das äußerlich dem des modifizierten Datensatzes 23 entspricht oder größer ist. Ab diesem Zeitpunkt kann das Datensegment 21 bereits auf einen oder mehrere Datenträger übertragen werden.

In einem Schlüsselgenerator 30 werden Schlüssel oder Schlüsselpaare zum Verschlüsseln und Entschlüsseln der zweiten Datensegmente generiert. Die Art der Verschlüsselung, nämlich asymmetrisches oder symmetrisches Verschlüsselungsverfahren, ist dabei in Bezug auf die vorliegende Erfindung unerheblich. Vielmehr ist es besonders vorteilhaft, wenn zwischen den Serien von informationsgleichen Datenträgern das Verschlüsselungsverfahren und die Schlüsselgenerierung verändert wird, so daß sich auch hier keine Möglichkeit zum Durchbrechen der gemäß diesem Verfahren erzeugten Datensicherung ermöglicht wird. In dem Schlüsselgenerator 30 wird gemäß dem Schritt 103 zunächst ein Schlüssel zum Verschlüsseln des Ausschnitts 24 bzw. zum Entschlüsseln des zweiten Datensegmentes 22 generiert. Gleichzeitig wird auch ein Abschnitt 31 generiert, der der Identifikation des zweiten Datensegmentes 22 dient.

Gemäß dem Schritt 104 wird nun der Ausschnitt 24 genommen und mittels des Schlüssels 32, der in dem Schlüsselgenerator 30 erzeugt wurde, verschlüsselt. Die Identifikation 31 wird an den Ausschnitt 24 bzw. an dessen verschlüsselten Ausschnitt angefügt und somit das datenträgerindividuelle Datensegment 22 generiert.

Dann werden die ersten Datensegmente 21 und die zweiten Datensegmente 22 und optional weitere Datensätze auf den Datenträger übertragen. Die Datensegmente bilden dadurch ihrerseits einen oder mehrere Datensätze auf dem Datenträger.

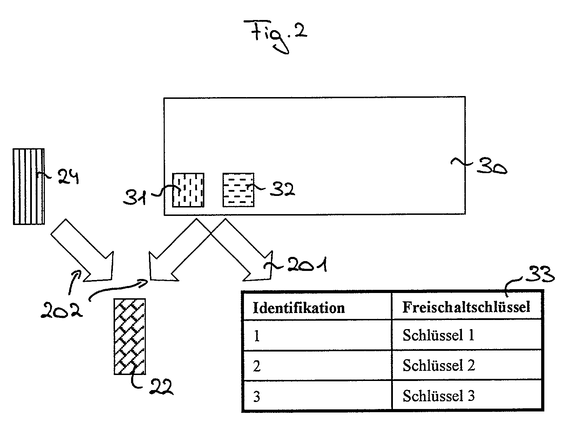

In der Fig. 2 ist in einer schematischen Darstellung die Schlüsselgenerierung im Generator 30 noch einmal näher erläutert. Im Schlüsselgenerator 30 wird für jedes zu erzeugende zweite Datensegment eines Datensatzes oder aber für sämtliche zweiten Datensegmente eines Datensatzes oder für einzelne zweite Datensegmente, Gruppen von zweiten Datensegmenten, oder alle zweiten Datensegmente eines Datenträgers ein Schlüssel generiert. Dieser Schlüssel besteht gemäß diesem Ausführungsbeispiel aus zwei Komponenten. Er besteht aus einem Schlüssel oder einem Schlüsselpaar 32, mittels dem die Daten verschlüsselt werden und mittels dem ein Entschlüsseln der Daten wieder möglich ist sowie auch einem dem Schlüssel zugeordneten, diesen identifizierenden Abschnitt 31. Gemäß dem Schritt 201 wird, beispielsweise beim Datenersteller oder Rechteinhaber, bzw. bei einem von diesem damit beauftragten, eine Datenbank 33 erzeugt, in der dem jeweiligen identifizierenden Abschnitt 31 zugeordnet, der Schlüssel 32 zum Entschlüsseln des zum Abschnitt 31 gehörenden Datensegmentes 22 abgelegt ist. Ein Berechtigter, der Zugriff auf die Daten des Datenträgers erhalten soll, wendet sich unter Angabe des Abschnittes 31, der eine Identifikation des Datenträgers bzw. des verschlüsselten Datensegments ermöglicht, an die Stelle, die Zugriff auf die Datenbank hat und die ihm dann nach Überprüfung seiner Berechtigung den entsprechenden Schlüssel 32 für die Entschlüsselung der zweiten Datensegmente oder wenigstens eines zweiten Datensegments auf seinem Datenträger zurückübermittelt. Bei dem Abschnitt 31 kann es sich dabei beispielsweise um einen alphanumerischen Code handeln, der lesbar oder elektronisch lesbar auf dem Datenträger angebracht ist. Dieser kann auch die Stelle benennen oder angeben, bei der der Schlüssel (=die erforderliche, nicht auf dem Datenträger enthaltene Information) zugänglich ist.

Der Ausschnitt 24, der das zweite Datensegment bilden soll, wird nun mittels dem Schlüssel 32 verschlüsselt und die Information des Abschnittes 31 wird ggf. hinzugefügt. Damit wird gemäß dem Schritt 202 das zweite Datensegment 22 erzeugt.

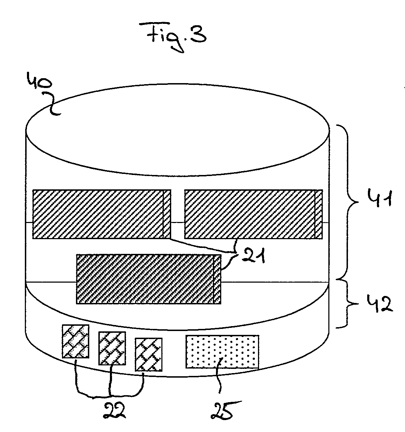

Die Fig. 3 zeigt einen Datenträger 40 gemäß der Erfindung in schematischer Darstellung. Der Datenträger 40 weist ein erstes Datenträgersegment 41 und ein zweites Datenträgersegment 42 auf. Das erste Datenträgersegment 41 beinhaltet erste Datensegmente 21 und kann weitere Datensätze oder Informationen, wie eine Entschlüsselungssoftware 25 mittels der die zweiten Datensegmente 22 entschlüsselbar sind, beinhalten und ist auf allen Datenträgern innerhalb einer Serie von informationsgleichen Datenträgern zu gleichen Datenträgern identisch.

Das zweite Datenträgersegment 42, das selbst ein geringeres maximales Datenvolumen als das erste Datenträgersegment 41 aufweist, beinhaltet die zweiten Datensegmente 22 und kann auch weitere Informationen, wie eine Entschlüsselungssoftware 25 mittels der die zweiten Datensegmente 22 entschlüsselbar sind enthalten. Das maximale Datenvolumen des zweiten Datenträgersegmentes 42 liegt dabei beispielsweise bei ca. 1 Prozent des Datenvolumens des gesamten Datenträgers 40.

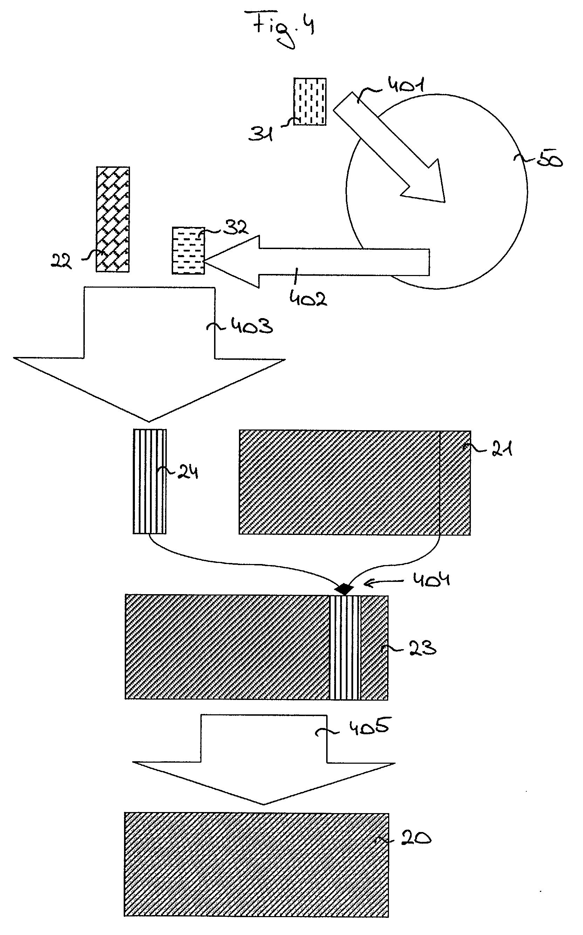

In der Fig. 4 ist der Ablauf eines Verfahrens dargestellt, mittels dem aus den auf dem Datenträger enthaltenen Datensegmente wieder vollständige und abarbeitbare Datensätze erzeugt werden.

Gemäß dem Schritt 401 wird die Information aus dem Abschnitt 31, der eine Identifikation eines einzelnen Datensegmentes oder aber eines Datenträgers ermöglicht, dem Rechteinhaber bzw. der von diesem beauftragten Stelle 50 mitgeteilt. Nach entsprechender Überprüfung übermittelt dieser den Schlüssel 32 gemäß Schritt 402 an den Berechtigten. Mittels des Schlüssels 32, dem auch eine wenigstens mittelbar den Berechtigten identifizierende Information - beispielsweise in Form eines sogenannten Wasserzeichens - beigefügt sein kann - was insbesondere von außen nicht erkennbar ist - kann der Berechtigte ein oder mehrere auf dem Datenträger enthaltene zweite Datensegmente 22 entschlüsseln. Dieses Entschlüsseln erfolgt gemäß dem Schritt 403. Bei dem Entschlüsseln wird der Ausschnitt 24 regeneriert. Dabei kann in dem Ausschnitt 24 die Information enthalten sein, an welcher Stelle bzw. welchen Stellen er in ein oder mehrere erste Datensegmente 21 einzufügen ist. Gemäß dem Schritt 404 wird das entsprechende erste Datensegment 21 genommen und die Informationen des Ausschnittes 24 an der vorhergesehenen Stelle eingefügt bzw. - falls Füll-Daten enthalten sind - substituiert. Somit ist der modifizierte Datensatz 23 wieder hergestellt. Gemäß dem Schritt 405 wird nun durch Umkehrung des die Entropie des Datensatzes erhöhenden Schrittes der Datensatz an sich wieder hergestellt. Nunmehr ist also der Berechtigte im Besitz eines ursprünglichen, eventuell eindeutig identifizierend gekennzeichneten Datensatzes 20 und er kann die in diesem Datensatz enthaltenen Informationen verarbeiten. Bei diesen Informationen kann es sich beispielsweise um ein Musikstück, beispielsweise in Form von einer MP3-Datei oder aber um eine Teildatei oder eine Datei eines Computerprogramms, wie einem Computerspiel, einer Animation oder dergleichen handeln. Es sei jedoch nochmals unterstrichen, daß die Durchführung des Schrittes, der die Entropie des ursprünglichen Datensatzes erhöht, bevor die Aufteilung in Datensegmente erfolgt u.U. vorteilhaft, jedoch nicht zwingend erforderlich ist. Weiterhin können u.U. ein oder mehrere, auch verschieden große Ausschnitte 24 aus einem oder mehreren Datensätzen 23 entnommen und der Verschlüsselung zugeführt werden, um die Sicherheit der Daten zu erhöhen.

## Patentansprüche

1. Verfahren zum Speichern einer Anzahl von Datensätzen auf Serien von informationsgleichen Datenträgern, wobei die Anzahl von Datensätzen auf einem Datenträger wenigstens eins (1) beträgt, **dadurch gekennzeichnet, daß**
- wenigstens ein Teil der Datensätze (20) in Datensegmente (21, 22) aufgeteilt wird, wobei
- wenigstens ein erstes und ein zweites Datensegment erzeugt wird,
- erste Datensegmente (21) in verarbeitbarer Form und
- zweite Datensegmente (22) für jeden Datenträger individuell abgewandelt und nicht ohne datenträgerspezifische, auf dem Datenträger (40) nicht enthaltene zusätzliche Information verarbeitbar
auf dem Datenträger (40) abgespeichert werden.

2. Verfahren nach Anspruch 1, **dadurch gekennzeichnet, dass** die in einem Datensatz (20) der in erste und zweite Datensegmente (21, 22) aufgeteilt wird vor dem generieren der Datensegmente eine reversible Erhöhung der Entropie des Datensatzes (20) vorgenommen wird.

3. Verfahren nach Anspruch 1 oder 2, **dadurch gekennzeichnet, dass** die Erhöhung der Entropie des Datensatzes (20) sich wenigstens auf einen Teil des Datensatzes erstreckt.

4. Verfahren nach Anspruch 2 oder 3, **dadurch gekennzeichnet, dass** das reversible Erhöhen der Entropie durch Datenkompression vorgenommen wird.

5. Verfahren nach einem der Ansprüche 2 bis 4, **dadurch gekennzeichnet, dass** das reversible Erhöhen der Entropie durch Verschlüsselung vorgenommen wird.

6. Verfahren nach Anspruch 5, **dadurch gekennzeichnet, dass** das Verschlüsseln derart erfolgt, dass mittels der auf dem Datenträger (40) enthaltenen Informationen ein Entschlüsseln möglich ist.

7. Verfahren nach Anspruch 6, **dadurch gekennzeichnet, dass** die zur Entschlüsselung notwendigen Informationen ihrerseits in einem zweiten Datensegment (22) abgelegt sind.

8. Verfahren nach einem der vorhergehenden Ansprüche, **dadurch gekennzeichnet, dass** die zweiten Datensegmente (22) des Datensatzes (23) so ausgewählt werden, dass die ersten Datensegmente (21) höchstens teilweise verarbeitbar sind.

9. Verfahren nach einem der vorhergehenden Ansprüche, **dadurch gekennzeichnet, dass** die zweiten Datensegmente (22) insbesondere Header enthalten.

10. Verfahren nach einem der vorhergehenden Ansprüche, **dadurch gekennzeichnet, dass** die zweiten Datensegmente (22) verschlüsselt auf dem Datenträger (40) abgelegt sind, wobei ein zweites Datensegment (22) nur mittels einem nicht auf dem Datenträger abgelegten Schlüssel (32) entschlüsselbar ist.

11. Verfahren nach Anspruch 9, **dadurch gekennzeichnet, dass** die zweiten Datensegmente (22) jedes Datensatzes (20) eines Datenträgers (40) mit einem datensatzindividuellen Schlüssel (32) verschlüsselt sind.

12. Verfahren nach einem der Ansprüche 9 oder 10, **dadurch gekennzeichnet, daß** beim Entschlüsseln der zweiten Datensegmente (22) dem Datensatz (20) ein Identifikationsmerkmal beigefügt wird, das zumindest mittelbar eine Information enthält, die den Berechtigten identifiziert, dem der Schlüssel (32) zum Entschlüsseln zweiter Datensegmente (22) mitgeteilt wurde.

13. Verfahren nach Anspruch 12, **dadurch gekennzeichnet, dass** das Identifikationsmerkmal insbesondere durch ein digitales Wasserzeichen realisiert wird.

14. Verfahren nach Anspruch 12 oder 13, **dadurch gekennzeichnet, dass** das Identifikationsmerkmal zusammen mit dem Schlüssel (32) zum Entschlüsseln übermittelt wird.

15. Verfahren nach einem der vorhergehenden Ansprüche, **dadurch gekennzeichnet, dass** bei aufgeteilten Datensätzen die Daten des ersten Datensegmentes (21) dadurch generiert werden, dass die Lücken, die durch Entnahme der zweiten Datensegmente (22) entstehen durch andere Daten, insbesondere mittels einem Zufallsgenerator generierte Daten, aufgefüllt werden und damit vorzugsweise ein zusammenhängender erster Datensatz (21) gebildet wird.

16. Verfahren nach einem der Ansprüche 1 bis 14, **dadurch gekennzeichnet, dass** bei aufgeteilten Datensätzen lediglich ein zusammenhängender erster Datensatz (21) vorgesehen ist, wobei der erste Datensatz (21) dadurch generiert wird, dass die Teile des Datensatzes, die nicht dem zweiten Datensatz (22) angehören, insbesondere in einer vorgegebenen Reihenfolge, aneinandergefügt werden.

17. Datenträger mit einer Anzahl von Datensätzen, wobei die Anzahl von Datensätzen wenigstens eins (1) beträgt, **dadurch gekennzeichnet, dass** der Datenträger (40) in zwei Datenträgersegmente (41, 42) aufgeteilt ist, wobei das erste Datenträgersegment (41) erste Datensegmente (21) und das zweite Datenträgersegment (42) zweite Datensegmente (22) enthält, wobei die ersten Datensegmente (21) in verarbeitbarer Form und die zweiten Datensegmente (22) nicht ohne zusätzliche, auf dem Datenträger nicht enthaltene, für jeden Datenträger individuelle Informationen verarbeitbar abgespeichert sind.

18. Datenträger nach Anspruch 17, **dadurch gekennzeichnet, dass** das zweite Datenträgersegment (42) ein geringeres Datenvolumen beinhaltet als das erste Datenträgersegment (41).

19. Datenträger nach einem der Ansprüche 17 oder 18, **dadurch gekennzeichnet, dass** das zweite Datenträgersegment (42) ein Bruchteil des Datenvolumens des Datenträgers, insbesondere zwischen 0,5 % und 10 % vorzugsweise um ca. 1 % enthält.

20. Datenträger nach einem der Ansprüche 17 bis 19, **dadurch gekennzeichnet, dass** der Datenträger (40) ein nur lesbarer, nicht überschreibbarer Datenträger (40) ist.

21. Datenträger nach einem der Ansprüche 17 bis 20, **dadurch gekennzeichnet, dass** wenigstens das zweite Datensegment (22) verschlüsselt ist.

22. Datenträger nach einem der Ansprüche 17 bis 21, **dadurch gekennzeichnet, dass** die Daten des ersten Datensegmentes (21) in verarbeitbarer Form abgespeichert sind.

23. Datenträger nach Anspruch 22, **dadurch gekennzeichnet, dass** die ersten Datenträgersegmente höchstens teilweise verarbeitbar sind.

24. Datenträger nach einem der Ansprüche 17 bis 23, **dadurch gekennzeichnet, dass** aus ersten und zweiten Datensegmenten (21, 22) eines Datensatzes der Datensatz (20) ermittelbar ist.

25. Datenträger nach einem der Ansprüche 17 bis 24, **dadurch gekennzeichnet, dass** der Datenträger (40) gegen identisches Kopieren (Klonen) gesperrt ist.

26. Datenträger nach einem der Ansprüche 17 bis 25, **dadurch gekennzeichnet, dass** der Datenträger (40) bzw. zweite Datensegmente (22) identifizierbar ist und insbesondere die zusätzliche Information zuordenbar ist.
